# EUROPEAN PATENT APPLICATION

(11) **EP 2 161 882 A1**
(43) Date of publication of application: **10.03.2010**
(21) Application number: 08753082.0
(22) Date of filing: 22.05.2008
(51) Int. Cl.: H04L 12/56, H04Q 7/38

(54) **COMMUNICATION SYSTEM USING NETWORK BASE IP MOBILITY PROTOCOL, CONTROL DEVICE, ROUTER, AND COMMUNICATION METHOD THEREOF**

(30) Priority: 28.05.2007 JP 2007140821
(71) Applicant: Sharp Kabushiki Kaisha, Osaka-shi, Osaka 545-8522 (JP)
(72) Inventor: TOYOKAWA, Suguru, Osaka 545-8522 (JP)
(74) Representative: Müller - Hoffmann & Partner
(86) International application number: PCT/JP2008/059451
(87) International publication number: WO 2008/146703

(57) **Abstract**

When an MN 1 is handed over from an MAGa 2 to an MAGb 3, a network-based IP mobility protocol processor 11 of an LMA 4 transmits header compression information to MAGb 3 while a network-based IP mobility protocol processor 7 of MAGb 3 stores the information into a storage 8. When receiving a packet, LMA 4 and MAGb 3 perform a tunneling process or a compression information process for every tunnel through which the packet passes, to perform appropriate compression/extension and routing. In this way, in a network-based IP mobility protocol, even if the MN had moved, the MN or LMA serves as a compressor and decompressor, so that it is possible to save the band for the last one hop, which is the narrowest band.

## Description

### Technical Field

The present invention relates to a communication technology using a network-based IP mobility protocol.

### Background Art

In recent years, research and development of mobility support in the IP layer such as Mobile IPv6 (Internet Protocol version6) etc., have been eagerly carried out. Mobile IP is a protocol of the network layer as the third layer of the OSI (Open Systems Interconnection) reference model, established by ISO (International Organization for Standardization), and is a technology for maintaining communications while hiding movement of a client (switching networks/communication media, momentary blackout of communication, and the like) from upper applications.

In TCP/IP (Transmission Control Protocol/Internet Protocol) as a communication protocol generally used in the current Internet, the IP address is an identifier and at the same time, indicates the location on the network. Accordingly, when a node that has been connected to a certain network is changed over to another network, the IP address also changes so that it become impossible to maintain sessions.

To deal with this, Mobile IP assigns a unique address to each node so as to replace the IP address that is being actually used within the TCP/IP stack, to thereby provide a configuration that makes it look as if the node is communicating based on the assigned unique address with the upper layer or a communication partner, no matter where the node is located at any network (see non-patented document 1, for example).

This Mobile IP is made up of a mobile node (Mobile Node, moving terminal, which will be referred to hereinbelow as "MN"), a home agent (Home Agent, which will be referred to hereinbelow as "HA") and a node called a correspondent node (Correspondent Node, which will be referred to hereinbelow as "CN").

The MN has a constantly unvaried address called home address (Home Address, which will be referred to hereinbelow as "HoA"), and the node that manages this address is the HA. The MN acquires an address used for actual communications, called care-of address(Care-of-Address, which will be referred to hereinbelow as "CoA"), in some manner, e.g., through router advertisement (Router Advertisement, which will be referred to hereinbelow as "RA") of stateless address auto configuration or through a DHCP (Dynamic Host Configuration Protocol)v6 of stateful address auto configuration, when the MN has been connected to a network other than the home link, i.e., the HA's link. The MN notifies the HA of the CoA acquired herein by a registration request message called Binding Update, which will be referred to hereinbelow as "BU".

As a result of this, when a node(=CN) that wants to communicate with the MN sends a packet to the HoA, the packet initially reaches the HA because the HoA is an address on the link that is controlled by the HA. As a result, the MN can communicate using the HoA. In the MN, an application that operates on the MN performs communication, constantly using the IP address called the HoA.

The CoA is used for the source address or destination of actual IPv6 packets. In order to hide movement against the upper application, techniques such as IPv6 in IPv6 encapsulation, mobility header and the like are used. As a result of this, the HoA is notified to the application while the IPv6 address (CoA) actually used is hidden.

Further, when the communication path to the CN is optimized in this Mobile IPv6, after signaling for security or a testing sequence called Return Routability, which will be referred to hereinbelow as "RR", the MN is determined to send a BU for route optimization to the CN. The RR is the function of notifying the CN of the validity of binding between the HoA and the CoA.

The RR is made up of messages sent from the MN to the CN, including HoTI (Home Test Init) sent by way of the HA and CoTI (Care of Test Init) sent directly to the CN and messages returned from the CN to the MN, including HoT (Home Test) returned by way of the HA and CoT (Care of Test) directly returned to the MN. When this RR sequence is completed correctly, the MN transmits BU to the CN in order to give notice of the CoA of itself. As a result of this, the CN can get the correct CoA of the MN, and becomes able to send packets directly, or achieve route optimization, instead of sending via the lengthy path passing through the HA.

More specifically, until this route optimization is completed, communication between MN and CN is performed by way of the HA, so that packets are sent between CN and HA by normal IPv6 while the packets are sent between HA and MN, being IPv6 encapsulated in IPv6. After route optimization, packets are directly delivered between MN and CN. In this while HoA is written into an option header.

Since MIPv6 and MIP-derived protocols control movement on the MN basis, they are called host-based mobility protocols. In contrast, a network-based IP mobility protocol, in which an MN can move by performing movement control on the network side without installing a special protocol for the movement thereof, has been also proposed by IETF (Internet Engineering Task Force) (see non-patented document 2, for example).

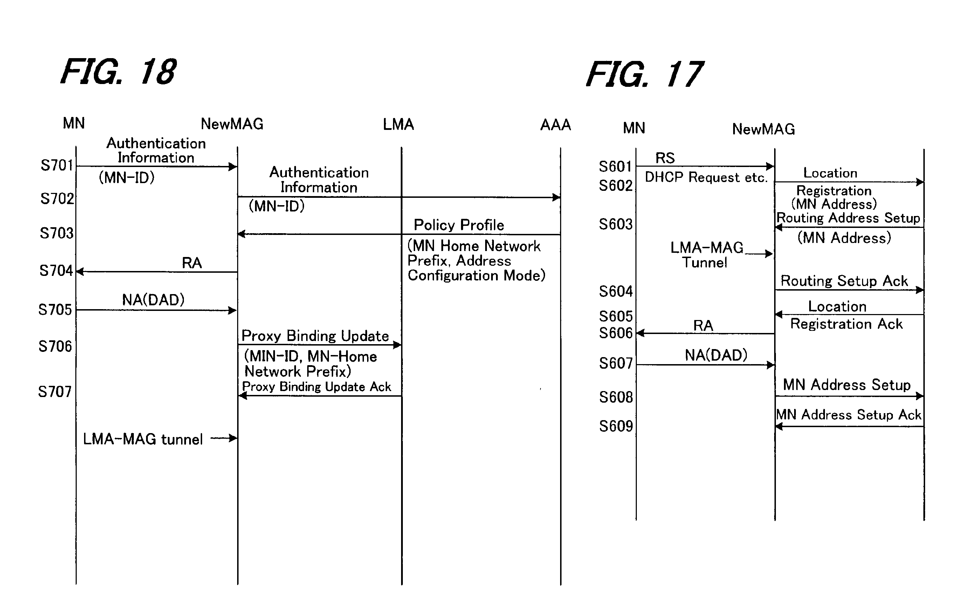

This keeps the MN from using any CoA and is effective in eliminating MN's encapsulation of packets and the like and in eliminating MN's signaling for movement. The sequence of handover based on this first network-based IP mobility protocol will be described with reference to FIG.17.

First, at S601, after being moved, the MN transmits a network configuration (network setup) request message such as a RS (Router Solicitation, which will be referred to hereinbelow as "RS"), a DHCP Request or the like, to the router or Mobile Access Gateway (which will be referred to hereinbelow as "MAG"), denoted as "NewMAG" in FIG. 17, on a visiting link.

MAG is a router for relaying between the MN having moved to the link and a route router as a control apparatus for performing IP Mobility control, or Local Mobility Anchor (which will be referred to hereinbelow as "LMA").
LMA controls a plurality of MAGs connected via network. LMA manages the identifiers and IP addresses of the MN and MAG in its storage.
The MAG also manages the identifiers and IP addresses of the MN and LMA in the storage thereof. These pieces of information the MAG manages can be acquired by communication with the LMA.

Between MAG and LMA, packets are tunneled by IPv6 in IPv6 encapsulation and adding a header with reference to the information managed in the storage, thereby achieving correct routing.
In the network described above, it is assumed that the MN sends an RS, herein for example, to the MAG in the link the MN visits.

When receiving the RS from the MN, MAG (NewMAG) transmits location registration (location registration request) to the LMA at S602.

As the LMA receives the location registration, it detects the event of handover and transmits routing setup to MAG(NewMAG) at S603 to set up a tunneling path between MAG(NewMAG) and LMA.

Here, the setup of a tunneling path is to create a configuration in which the LMA encapsulates the packet addressed to the MN so as to be addressed to the MAG and transmits the packet to the MAG, and the MAG having received the packet decapsulates and transfers the packet to the MN.

The MAG (NewMAG) having received this routing setup transmits a routing setup Ack (Acknowledgement) for confirmation to the LMA at S604.

Further, the LMA having received the location registration from the MAG (NewMAG) transmits a location registration Ack for confirmation to the MAG (NewMAG) at 5605.

At S606 the MAG(NewMAG) transmits RA to the MN, and the MN performs address configuration (address setup).

Thereafter, at S607, the MN performs DAD (Duplicate Address Detection, which will be referred to hereinbelow as "DAD") using NA (Neighbor Advertisement, which will be referred to hereinbelow as "NA") so as to confirm that the address is unique and complete the address configuration. The MAG(NewMAG) also transmits the MN address setup to the LMA at S608. At S609, the LMA transmits MN address setup Ack to the MAG(NewMAG).

As a result of completion of setup of this LMA-MAG tunnel route and the MN address configuration, packets are reachable to the MN. This is the way of handover in the network-based IP mobility protocol. In one words, since the packet addressed to the MN is sent by way of the LMA, it is possible to route the packet to the MN by completing the tunnel between the LMA and MAG.

There is another proposal of a Proxy Mobile IP scheme using a network-based IP mobility protocol, in which an MAG provides a proxy function for MNs in Mobile IP, using an AAA (Authentication Authorization Accounting) server for performing authentication (see non-patented document 3, for example).

The procedural steps of handover in this second protocol Proxy Mobile IP scheme of network-based IP mobility will be described using a sequence diagram shown in FIG.18.

First, at S701, after being moved, the MN transmits authentication information including the ID of itself, i.e., the MN-ID, to the MAG(NewMAG).

At S702, the MAG(NewMAG) having received the authentication information from the MN transmits the authentication information including the MN-ID to the AAA server as an authentication server for authentication.

At S703, the AAA server having received the authentication information from the MAG(NewMAG) checks the validity of the MN and returns a policy profile if it is determined to be valid.
This policy profile includes MN address configuration information such as information on the home network prefix, the configuration scheme (either stateful setup or stateless setup) and the like.

In the MAG (NewMAG) having received from the AAA server the policy profile including this address configuration information, the RA becomes able to be sent to the MN, so that the RA is transmitted to the MN at S704.

The MN having received the RA from the MAG (NewMAG), configures an address and performs NA and DAD at S705. This step may be omitted.

The MAG(NewMAG), after sending RA, transmits Proxy Binding Update to the LMA at S706 in order to create a tunnel to the LMA.
This message includes the MN-ID, home prefix of the MN and the like.

The LMA having received the Proxy Binding Update, returns Proxy Binding Update Ack to the MAG (NewMAG) at S707.

In this way, a bidirectional tunnel is created between the LMA and the MAG so that routing to the MN is made possible.

Also, as a technology of compressing the header of IP/UDP/RTP(Internet Protocol/User Datagram Protocol/Real-time Transport Protocol), Robust Header Compression (which will be called "ROHC" hereinbelow) has been known (see non-patented document 4, for example).

In this ROHC, CID (Context ID) that is a discrimination ID to be notified at the time of initialization is associated with a predicable header field, this information is shared between the compressor for compressing the data and the decompressor for restoring the data, and the compressor transmits the data added with the CID in place of the header while the decompressor restores the header from the CID.

This predicable header field also includes the source IP address that indicates the sender and the destination IP address that indicate the receiver.

Further, assignment of sequence numbers based on W-LSB(Window-Based Least-Significant Bit) enables prediction of other fields and provides robustness against packet loss.

In addition, ROHC has a state and mode. As to the state, the amount of compression is adjusted to three levels, complete header/difference/compressed header to the maximum, in accordance with the link condition. As to the mode, the feedback timing provided by the decompressor is selected from among three kinds, no feedback, feedback when there is a problem, and feedback at all times.

This selection of the state and mode in accordance with the link condition as well as use of W-LSB enables ROHC to provide high compression performance and high robustness.

Based on this ROHC technology, there have been disclosed technologies for transferring packets with their IP header compressed between RNCs (Radio Network Controllers) (see patent document 1, for example).
Patent document 1:
Japanese Patent Application Laid-open 2003-224610 Non-patented document 1: Request for Comments(RFC)3775,
"Mobility Support in IPv6"
Non-patented document 2: Internet Draft
"draft-giaretta-netlmm-dt-protocol"
Non-patented document 3: Internet Draft
"draft-sgundave-mip6-proxymip6"
Non-patented document 4: Request for Comments(RFC)3095, "RObust Header Compression (ROHC): Framework and four profiles: RTP, UDP, ESP, and uncompressed".

### Disclosure of Invention

### Problems to be Solved by the Invention

However, the technology disclosed in patent document 1 is available on the assumption that a channel has been established, hence it is impossible for the router to forward packets with the compressed header to a mobile terminal because CIDs happen to conflict when a plurality of MNs are used in a connectionless system such as IP.
That is, it is difficult to use this ROHC in the first and second network-based IP mobility protocol schemes.

Because the most important object of the header compression is to save the band (of the wireless link in most cases) for the last one hop, which is the narrowest band, it is less effective unless the decompressor for MNs resides in MNs, and it is less effective if the packet compressor from MNs also resides in MNs.

That is, the decompressor for packets to an MN should be the MN, and in this case, the compressor is either the LMA or MAG. Here, when it is assumed that compression is performed at the LMA, the relaying MAG does not have any IP address information on MN when the MAG decapsulates the packet sent from the LMA. Hence, the MAG cannot know which MN it should deliver the packet to.

Further, when a packet is transmitted from an MN, it is impossible to determine the MN from which the packet has been sent by way of the MAG, so that the packet cannot be extended at the LMA.

On the other hand, when it is assumed that compression is performed at MAGs, since a new MAG, after handover, has no state, it has to start the operation over again from the phase for creating the state, hence the advantage of header compression weakens. Accordingly, it is difficult to efficiently perform header compression by either of these methods.

Further, when the communication partner is an IPmobile node terminal, mobility signaling such as RR and BU is sent to the MN in network-based IP mobility protocol, hence the signaling has to travel through the narrow band. Moreover, after route optimization, option headers are inevitably attached to the IP packets. In ROHC, no description is given as to how to compress option headers, so that the header compression efficiency has to be markedly lowered.

The present invention has been devised to solve the above problems, it is therefore an object of the present invention to provide a communication system, control apparatus and router using a network-based IP mobility protocol as well as to a communication method for the same, in which, in a network-based IP mobility protocol, even when an MN has moved, the MN or LMA functions as a compressor or decompressor so as to be able to save the band for the last one hop, which is the narrowest band.

### Means for Solving the Problems

In view of the above circumstances, the communication system using a network-based IP mobility protocol according to the first invention is a communication system in which a mobile terminal, based on the network-based IP mobility protocol, performs communication by transmission and reception of data through a router that belongs to the same link, based on an address uniquely assigned to the mobile terminal, and when the mobile terminal has moved to another network, communication is changed over by the control of a control apparatus, and is **characterized in that** the router on a visiting network of the mobile terminal, receives a notice including an identifier of the mobile terminal, from the mobile terminal and transmits a notice including the identifier of the mobile terminal and the identifier or IP address of the router, to the control apparatus; the control apparatus transmits a notice of the information including routing information on the mobile terminal, to the router on the visiting site of the mobile terminal; and, the control apparatus and the router share the routing information so as to perform compression or extension and routing of data between the control apparatus and the mobile terminal.

The communication system using a network-based IP mobility protocol according to the second invention is a communication system in which a mobile terminal, based on the network-based IP mobility protocol, performs communication by transmission and reception of data through a router that belongs to the same link, based on an address uniquely assigned to the mobile terminal, and when the mobile terminal has moved to another network, communication is changed over by the control of a control apparatus, and is **characterized in that** the router on a visiting network of the mobile terminal, receives a notice including an identifier of the mobile terminal, from the mobile terminal and transmits a notice including the identifier of the mobile terminal to a information management apparatus; the information management apparatus transmits a notice of the information including address setup information on the mobile terminal, to the router on the visiting site of the mobile terminal; the router transmits a notice including an identifier and/or the IP address of the mobile terminal and the IP address of the router, to the control apparatus; the control apparatus transmits a notice of the information including routing information on the mobile terminal, to the router; and the control apparatus and the router share the routing information so as to perform compression or extension and routing of data between the control apparatus and the mobile terminal.

The communication system using a network-based IP mobility protocol according to the third invention is **characterized in that** the control apparatus and the router include a routing processor for each of the mobile terminals; the control apparatus compresses the header of data based on compression information, performs a header process at the routing processor for the mobile terminal and transmits the data to the router; and, the router having received the data from the control apparatus identifies the mobile terminal based on the routing information of the data and transmits the data to the mobile terminal.

The communication system using a network-based IP mobility protocol according to the fourth invention is **characterized in that** the mobile terminal compresses the header of data based on compression information shared with the control apparatus and transmits the data to the router; the router having received the data from the mobile terminal identifies the mobile terminal based on bearer information of the data, performs a header process at the routing processor for the mobile terminal and transmits the data to the control apparatus; and the control apparatus having received the data from the router identifies the mobile terminal based on routing information of the data and extends the header based on the compression information of the mobile terminal.

The communication system using a network-based IP mobility protocol according to the fifth invention is **characterized in that** the routing processor performs a tunneling process and attaches a destination address to the header by encapsulating the data.

The communication system using a network-based IP mobility protocol according to the sixth invention is **characterized in that** in the routing processor a process of attaching an option header to the data is performed, and the routing processor of the control apparatus or the router having received the data identifies the mobile terminal with which data is received and transmitted based on the option header.

The communication system using a network-based IP mobility protocol according to the seventh invention is **characterized in that** the control apparatus executes a proxy function for the mobile terminal when the terminal communicated with the mobile terminal performs data transmission and reception based on a Mobile IP protocol.

The communication system using a network-based IP mobility protocol according to the eighth invention is a communication system in which a mobile terminal, based on the network-based IP mobility protocol, performs communication by transmission and reception of data through a router that belongs to the same link, based on an address uniquely assigned to the mobile terminal, and when the mobile terminal has moved to another network, communication is changed over by the control of a control apparatus, and is **characterized in that** the control apparatus includes a storage means for storing a binding cache as the communication information on the mobile terminal to relay based on Mobile IPprotocol; and, the control apparatus relays the data between the mobile terminal and a terminal that uses the Mobile IP protocol, when the received data is used for communication between the mobile terminal controlled by the control apparatus and the terminal using the Mobile IP protocol.

The control apparatus according to the ninth invention is a control apparatus which is used in a system performing communication in which a mobile terminal, based on the network-based IP mobility protocol, performs communication by transmission and reception of data through a router that belongs to the same link, based on an address uniquely assigned to the mobile terminal, and performs control of changing over communication when the mobile terminal has moved to another network, comprising: a communication means which receives a notice including the identifier of the mobile terminal, the identifier or IP address of the router, from the router on the visiting network of the mobile terminal; a storage means which holds the communication information on the router for relaying and the mobile terminal and the header compression information; and, a control means for referring to the storage means with regards to the communication information on the mobile terminal based on the identifier of the mobile terminal included in the notice from the router, updating the information on the router on the visiting site, and creating a notice of information including the routing information on the mobile terminal to be transmitted to the router, and is **characterized in that** the control apparatus shares the routing information with the router so as to perform compression or extension and routing of data between itself and the mobile terminal.

The control apparatus according to the tenth invention further comprises: a compression/extension processor for each of the mobile terminals for performing compression and extension of the header of the data; and a routing processor for each of the mobile terminals, and is **characterized in that** the compression/extension processor compresses the header of data based on the compression information, the routing processor performs a header process, and the communication means transmits the data to the router.

The control apparatus according to the eleventh invention is **characterized in that** the control means discriminates the mobile terminal based on the routing information on the data received from the router, and the compression/extension processor extends the header by reference to the compression information of the mobile terminal stored in the storage means.

The control apparatus according to the twelfth invention is **characterized in that** the routing processor performs a tunneling process and attaches a destination address to the header by encapsulating the data.

The control apparatus according to the thirteenth invention is **characterized in that** in the routing processor a process of attaching an option header is performed when the data is transmitted to the router, so that the mobile terminal for receiving and transmitting the data is recognized based on the option header.

The control apparatus according to the fourteenth invention is **characterized in that** the control means executes a proxy function for the mobile terminal when the terminal communicated with the mobile terminal performs data transmission and reception based on a Mobile IP protocol.

The control apparatus according to the fifteenth invention is a control apparatus which is used in a system performing communication in which a mobile terminal, based on a network-based IP mobility protocol, performs communication by transmission and reception of data through a router that belongs to the same link, based on an address uniquely assigned to the mobile terminal, and performs control of changing over communication when the mobile terminal has moved to another network, comprising: a storage means for storing a binding cache which is the communication information on the mobile terminal to relay based on Mobile IP protocol; and, a control means, which, when the received data is used for communication between the mobile terminal that is controlled by itself and a terminal using the Mobile IP protocol, relays the data between the mobile terminal and the terminal that uses the Mobile IP protocol.

The router according to the sixteenth invention is a router for performing transmission and reception of data with a mobile terminal that belongs to the same link and performs communication using network-based IP mobility protocol based on an address uniquely assigned to the mobile terminal under the control of a control apparatus, comprising: a first communication means for receiving a notice from the mobile terminal that has moved; a storage means for storing the identifier of the mobile terminal; a control means for creating a notice to be transmitted to the control apparatus, the notice including the identifier of the mobile terminal, the identifier or IP address of the router; and, a second communication means for communicating with the control apparatus, and is **characterized in that** the second communication means transmits the notice to the control apparatus, or receives a notice of information including routing information on the mobile terminal, from the control apparatus; the control means stores the information including the routing information on the mobile terminal, into the storage means; and the router shares the routing information with the control apparatus, thereby transferring compressed data to the control apparatus or the mobile terminal.

The router according to the seventeenth invention is a router for performing transmission and reception of data with a mobile terminal that belongs to the same link and performs communication using network-based IP mobility protocol based on an address uniquely assigned to the mobile terminal under the control of a control apparatus, comprising: a first communication means for receiving a notice from the mobile terminal that has moved; a storage means for storing the identifier of the mobile terminal; a first control means for creating a notice including the identifier of the mobile terminal; a second control means which transmits the notice to an information management apparatus or receives address setup information on the mobile terminal from the information management apparatus; and, a second control means which, based on the address setup information, creates an address setup notice, including an address prefix, to be notified to the mobile terminal and routing information, including the identifier or address information of the mobile terminal and router address information, to be notified to the control apparatus, and is **characterized in that** the first communication means gives the address setup notice to the mobile terminal, and the second communication means gives the routing information to the control apparatus, and the router shares the routing information with the control apparatus, thereby transferring compressed data to the control apparatus or the mobile terminal.

The router according to the eighteenth invention is **characterized in that** a routing processor is provided for each of the mobile terminals, and, the control means, when it has received the data from the control apparatus, discriminates the mobile terminal based on the routing information of the data and transfers the data to the mobile terminal.

The router according to the nineteenth invention is **characterized in that** the control means, when it has received the data from the mobile terminal, identifies the mobile terminal based on bearer information on the data, performs a header process at the routing processor and transfers the data to the control apparatus.

The router according to the twentieth invention is **characterized in that** the routing processor performs a tunneling process and attaches a destination address to the header by encapsulating the data.

The router according to the twenty-first invention is **characterized in that** the routing processor, when transmitting the data to the control apparatus, performs a process of attaching an option header, and when having received the data from the control apparatus, discriminates the mobile terminal based on the option header and transfers the data to the mobile terminal.

The communication method according to the twenty-second invention is a communication method, which, using a network-based IP mobility protocol, causes a mobile terminal to transmit and receive data through a router that belongs to the same link, based on an address uniquely assigned to the mobile terminal, and causes a control apparatus to perform control of changing over communication of the mobile terminal when the mobile terminal has moved to another network, and is **characterized in that** the mobile terminal implements a step of creating a notice including the identifier of the mobile terminal and a step of transmitting the notice to the router on the visiting site; the router on the visiting site implements a step of creating a notice including the identifier of the mobile terminal and the identifier or IP address of the router; the control apparatus implements a step of transmitting the notice created by the router; and the control apparatus implements a step of creating a notice of information including routing information on the mobile terminal, and a step of transmitting the notice created by the control apparatus to the router at the visiting site, so that the control apparatus and the router share the routing information thereby performing compression or extension and routing of data between the control apparatus and the mobile terminal.

The communication method according to the twenty-third invention is a communication method, which, using a network-based IP mobility protocol, causes a mobile terminal to transmit and receive data through a router that belongs to the same link, based on an address uniquely assigned to the mobile terminal, and causes a control apparatus to perform control of changing over communication of the mobile terminal when the mobile terminal has moved to another network, and is **characterized in that** the mobile terminal implements a step of creating a notice including the identifier of the mobile terminal and a step of transmitting the notice to the router on the visiting site; the router on the visiting site implements a step of creating a notice including the identifier of the mobile terminal and a step of transmitting the notice created by the router to an information management apparatus; the information management apparatus implements a step of creating a notice including address setup information by searching stored address setup information, based on the identifier of the mobile terminal and a step of transmitting the notice created by the information management apparatus to the router; and, the router implements a step of creating a notice including the address information of the mobile terminal and the address information of the router, and a step of transmitting a notice including the address information of the mobile terminal and the router to the control apparatus, so that the control apparatus and the router share the routing information, thereby performing compression or extension and routing of data between the control apparatus and the mobile terminal.

The communication method according to the twenty-fourth invention is **characterized in that** the control apparatus executes a proxy function for the mobile terminal when the terminal with which the mobile terminal communicates performs data transmission and reception based on a Mobile IP protocol.

The communication method according to the twenty-fifth invention is a communicationmethod, which, using a network-based IP mobility protocol, causes a mobile terminal to transmit and receive data through a router that belongs to the same link, based on an address uniquely assigned to the mobile terminal, and causes a control apparatus to perform control of changing over communication of the mobile terminal when the mobile terminal has moved to another network, and is **characterized in that** when the received data is used for communication between the mobile terminal controlled by the control apparatus and a terminal using a Mobile IP protocol, the control apparatus relays the data between the mobile terminal and the terminal that uses the Mobile IP protocol.

### Effect of the Invention

According to the present invention, in the network-based IP mobility protocol, when the mobile terminal (NM) has moved to another network, the control apparatus (LMA) transmits routing information (information relating to the tunnel) to a new router (MAG), or the new router (MAG) transmits routing information (information relating to the tunnel) to the control apparatus (LMA) so as to share the routing information between the router and the control apparatus, whereby the router can forward the compressed data exchanged between the control apparatus and the mobile terminal, hence it is possible to save the band for the last one hop, which is the narrowest band.

Further, the control apparatus and the router are provided with a tunnel processor for each tunnel through which data passes, so that the mobile node can be identified from the tunnel, thereby making it possible to achieve appropriate routing.

Further, since the control apparatus and the router include an option header portion, it is possible to achieve appropriate compression, extension or routing of data.

Further, the router can identify the mobile terminal based on the bearer information of the received data from a mobile terminal, thereby making it possible to achieve appropriate routing.

Moreover, upon communication with a terminal using Mobile IP protocol (MIP-MN), the control apparatus acts as a proxy for a correspondent node (MIP-CN) in the communication based on Mobile IP protocol, so that mobility signalings or headers in Mobile IP protocol become unnecessary between the control apparatus and the mobile terminal, hence it is possible to prevent degradation of header compression efficiency.

### Brief Description of Drawings

[FIG. 1] is a diagram showing a schematic configuration of a network in the first embodiment.
[FIG. 2] is a sequence diagram showing the procedural steps of the process in the first embodiment.
[FIG. 3] is a block diagram showing a configuration of an MAG in the first embodiment.
[FIG. 4] is a block diagram showing a configuration of an LMA in the first embodiment.
[FIG. 5] is a diagram showing a configurational example of header compression information.
[FIG. 6] is a diagram showing format examples of a packet.
[FIG. 7] is a diagram showing database examples in a storage.
[FIG. 8] is a diagram showing a schematic configuration of a network in the second embodiment.
[FIG. 9] is a sequence diagram showing the procedural steps of the process in the second embodiment.
[FIG. 10] is a block diagram showing a configuration of an MAG in the second embodiment.
[FIG. 11] is a block diagram showing a configuration of an LMA in the second embodiment.
[FIG. 12] is a diagram showing a schematic configuration of a network in the third embodiment.
[FIG. 13] is a sequence diagram showing the procedural steps of the process in the third embodiment.
[FIG. 14] is a diagram showing a schematic configuration of a network in the fourth embodiment.
[FIG. 15] is a sequence diagram showing the procedural steps of the process in the fourth embodiment.
[FIG. 16] is a flow chart diagram showing the procedural steps of a proxy process of Mobile IPv6 function in an LMA.
[FIG. 17] is a sequence diagram showing the procedural steps of a handover process based on a conventional network-based mobility protocol.
[FIG. 18] is a sequence diagram showing the procedural steps of a handover process based on Proxy Mobile IP scheme using a conventional network-based IP mobility protocol.

### Description of Reference Numerals

- 1,20,23: mobile node
- 2,3,26: mobile access gateway
- 4,18,19,25: local mobility anchor
- 5,6,10: communication means
- 7,11: network-based IP mobility protocol processor
- 8,12: storage
- 9,13: tunneling processor
- 14: compression/extension processor
- 15: AAA server
- 16,17: option header processor
- 21: home agent
- 22: router
- 24: Internet

### Best Mode for Carrying Out the Invention

Next, the embodiments of the present invention will be described with reference to the drawings.

### [The first embodiment]

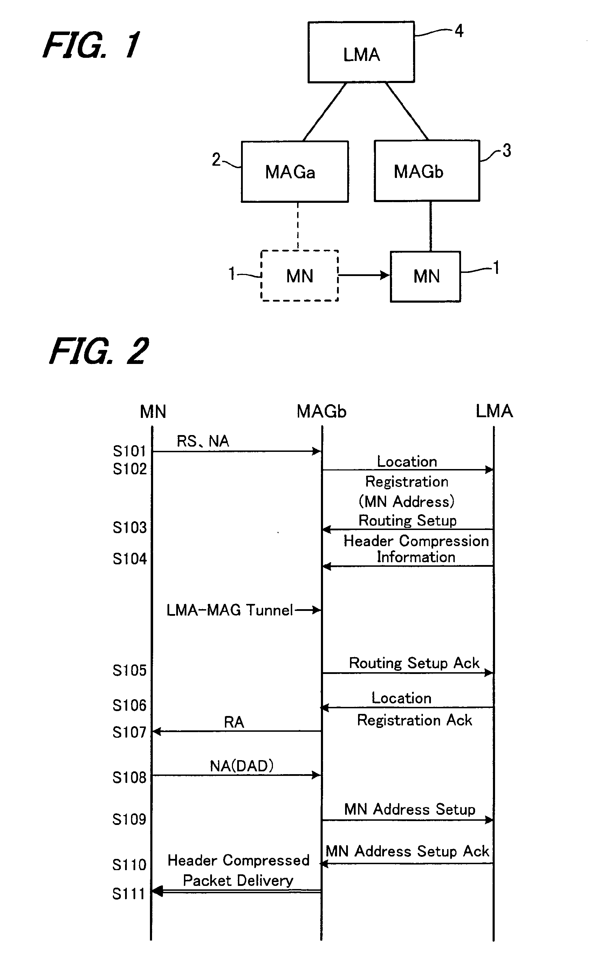

FIG. 1 is a diagram showing a schematic configuration of a network in the present embodiment.
FIG. 2 is a sequence diagram showing the procedural steps of a process in the present embodiment.

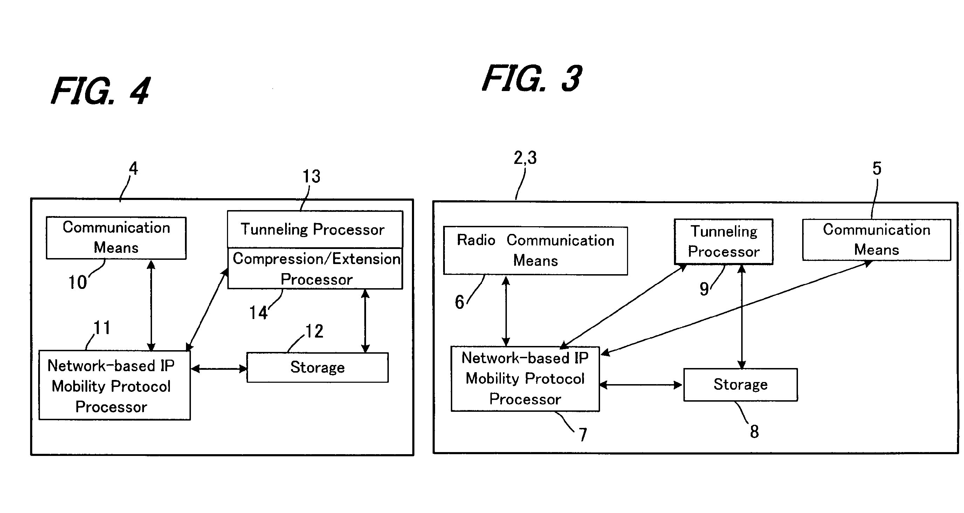

FIG. 3 is a block diagram showing a configuration of an MAG in the present embodiment.
FIG. 4 is a block diagram showing a configuration of an LMA in the present embodiment.

As shown in FIG. 1, initially, an MN 1 is under the control of an MAGa 2. It is assumed that MN 1 transfers from the control of MAGa 2 to the control of an MAGb 3 as it moves.

Hereinbelow, the MAG in FIG. 3 and the LMA in FIG. 4 will be described.
As shown in FIG. 3, MAGs 2 and 3 are configured by inclusion of: a communication means 5 that communicates with an LMA 4 through a wired path such as LAN (Local Area Network), the Internet or the like; a radio communication means 6 that communicates with MN 1 by wireless; a network-based IPmobility protocol processor 7 that performs control as to network-based IP mobility protocols; a storage 8 made of a database section and a temporary storage capable of temporarily storing; and a tunneling processor 9.

As shown in FIG. 4, LMA 4 is also configured by inclusion of a communication means 10, a network-based IP mobility protocol processor 11, a storage 12 and a tunneling processor 13. The difference from MAGs 2 and 3 is that the LMA includes a compression/extension processor 14 for performing compression and extension of headers.

Referring next to the sequence diagram of FIG.2, the flow of a process of the present embodiment will be described.
First, at S101, after being moved under the control of MAGb 3, MN1 transmits address configuration information at least including MN-ID, which is the identifier of MN 1, to MAGb 3 or the link local multicast address. In most cases, this is RS and/or NA.

Network-based IP mobility protocol processor 7 of MAGb 3 having received the RS and/or NA from radio communication means 6 stores the MN-ID into storage 8 and generates location registration at least including the MN-ID and MAGb-ID, the identifier of MAGb 3 and transmits it from communication means 5 to LMA 4, at S102.

Then, network-based IP mobility protocol processor 11 of LMA 4 having received the location registration from communication means 10, extracts the MN-ID included in the location registration, and searches the data held at storage 12 of LMA 4 for the current state of MN 1, based on this MN-ID as a key. As a result of this, network-based IP mobility protocol processor 11 grasps from the data that MN 1 is currently belonging to MAGa 2. As receiving the location registration from MAGb 3, network-based IP mobility protocol processor 11 recognizes that MN 1 has moved, though the data shows that MN 1 is currently belonging to MAGa 2.

Upon this, at S103, network-based IP mobility protocol processor 11 of LMA 4 creates routing setup(routing setup instructions) at least including LMA-ID, which is the identifier of LMA 4 and the global address of MN 1 and transmits the setup to MAGb 3 from communication means 10.

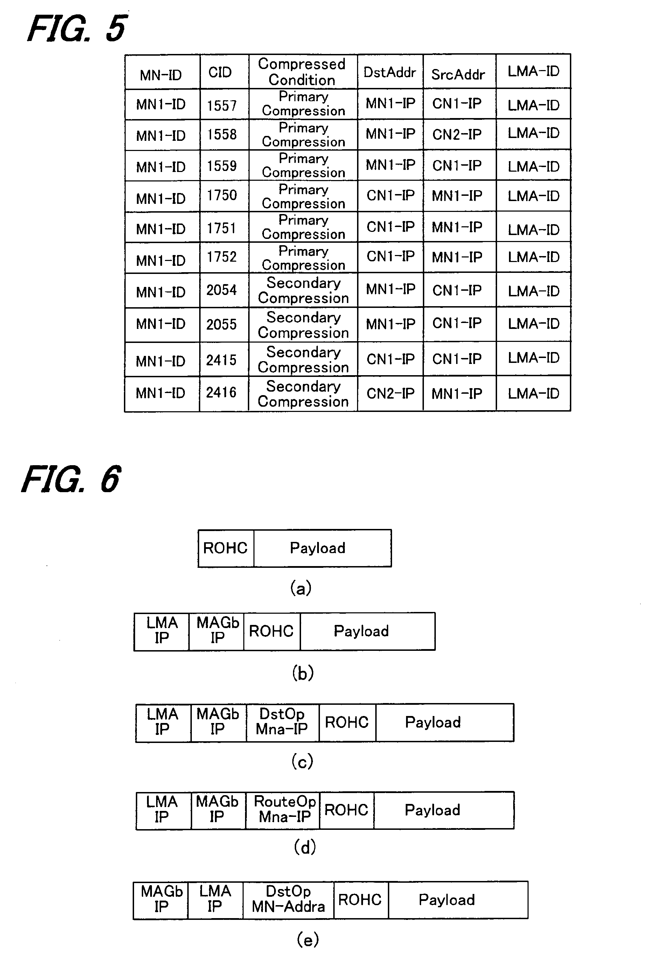

FIG. 5 is a diagram showing a configurational example of header compression information (ROHC) held in storage 8 of MAGb 3.
At S104, network-based IP mobility protocol processor 11 of LMA 4 also transmits header compression information as shown in FIG. 5 to MAGb 3. The header compression information may be transmitted separately as in this sequence diagram, or may be transmitted being included in the routing setup at S103. Further, this header compression information does not need to include all header information, but includes at least the IP address of the MN, CID, the IP address of LMA 4 or the LMA 4's ID, LMA-ID, and also description of the rule for compressing and extending the header (the compressed state in FIG. 5), all these being associated with MN-ID.

MAG 3 having received the routing setup from LMA 4, creates a tunnel to LMA 4 and initializes the module to be the tunneling processor 9 for the MN identifiable from MN-ID. This tunneling processor 9 is created for every MN which is under control.
Tunneling processor 9 adds a header indicating the destination to the header of the packet to be transmitted, so as to encapsulate it, or remove the header from the received encapsulated packet to decapsulate it.

Also, MAGb 3 having received the header compression information from LMA 4 stores this header compression information into storage 8. The header compression information will be stored in storage 8 together with other header compression information as shown in FIG. 5, for example. Further, at S105, a routing setup Ack for confirmation is transmitted to LMA 4.

LMA 4 having the received routing setup Ack, creates a tunnel to MAGb 3, and initializes the modules to be the tunneling processor 13 and compression/extension processor 14 for the MN identifiable fromMN-ID. The tunnelingprocessor 13 and compression/extension processor 14 are created for every MN which is under control, and these operate together.

Since tunneling processors 9 and 13 are created for every MN in LMA 4 and MAGb 3, as to the compressed packet after decapsulation, as shown in FIG. 6(a), LMA 4 can correctly extend the packet from MAGb 3 and MAGb 3 can deliver the packet from LMA 4 to correct MN 1.

Network-based IP mobility protocol processor 11 of LMA 4 having received routing setup Ack from MAGb 3, transmits location registration Ack, at least including the prefix information of MN 1, to MAGb 3, at S106.

Next, at S107, network-based IP mobility protocol processor 7 of MAGb 3 having received location registration Ack, transmits RA to MN 1 from radio communication means 6, based on the aforementioned prefix information.

MN 1 having received RA from MAGb 3 transmits NA to the link, following the DAD sequence.

At S109, network-based IP mobility protocol processor 7 of MAGb 3 receives this NA from MN 1 via radio communication means 6, then transmits MN address setup including MAGb-ID, MN-ID and MN address to LMA 4. At S110, network-based IP mobility protocol processor 11 of LMA 4 transmits MN address setup Ack for confirmation to MAGb 3.

Thereafter, at and after S111, network-based IP mobility protocol processor 7 of MAGb 3 starts delivering the header-compressed packet from LMA 4, to MN 1.

Hereinbelow, the process of delivering a packet with its header compressed by LMA 4 to MN 1 by way of MAGb 3 in the present embodiment will be detailed.

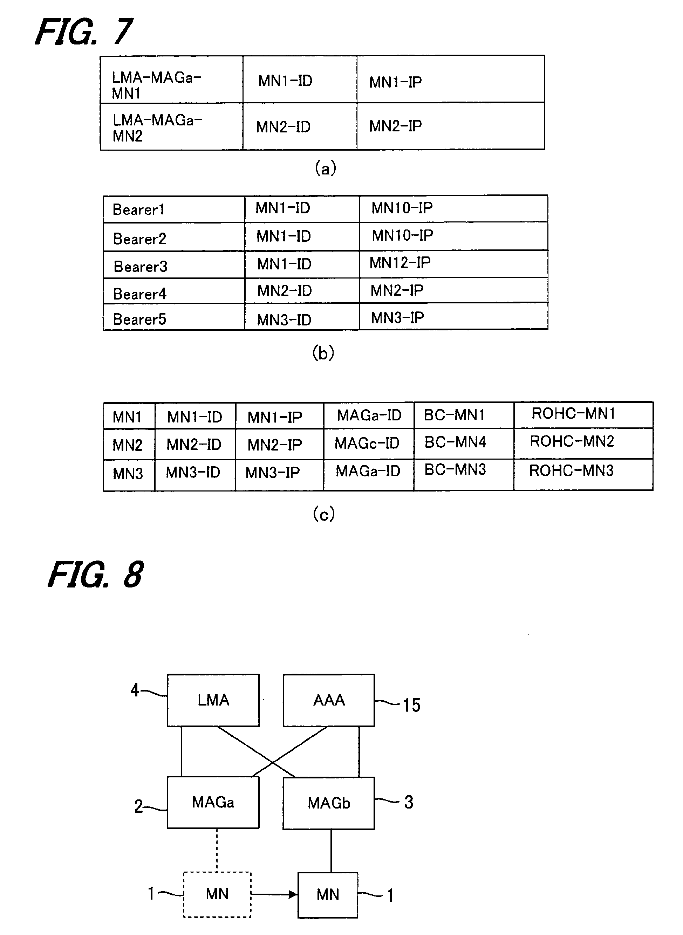

FIG. 7 is one example of data held in storages 8 and 12 of the MAG and LMA.
First, the data held at the MAG will be described.
FIG. 7 (a) is a table example for identifying the MN from the tunnel information when the MAG receives a packet from the LMA. Network-based IP mobility protocol processor 7 of the MAG can identify the ID or IP address of the MN by referring to this table in storage 8 and can deliver the packet to the correct MN.

FIG. 7(b) is a table example for identifying the MN from the bearer, e.g., MAC address etc., when the MAG receives a packet from an MN. Network-based IP mobility protocol processor 7 of the MAG can identify the ID or IP address of the MN by referring to this table in storage 8 and can deliver the packet to the correct LMA.

Next, the data held in the LMA will be described.
The LMA also holds data as shown in FIG. 7(a). Network-based IP mobility protocol processor 11 of the LMA can identify the ID or IP address of the MN by referring to this table in storage 12 and can deliver the packet to the correct MN.

FIG. 7(c) is a table example for referring to compression information when the LMA receives a packet from the MAG.
The LMA identifies the MN from the data in FIG. 7(a) and extends the header by referring to the header compression information, e.g., ROHC-MN1, based on the MN information, so as to be able deliver the packet to the Internet side.

The MAG and LMA hold the data as above, so that they can implement appropriate compression or extension and routing of packets.

Next, packet delivery from the LMA to the MN will be described.
Network-based IP mobility protocol processor 11 of LMA 4 having received a packet addressed to MN 1, from a foreign network via communication 10, outputs the packet to compression/extension processor 14 for MN 1.
Compression/extension processor 14 refers to storage 12, and based on the compression information shared with MN 1, compresses the header of the packet, as shown in FIG. 6(a).

Then, network-based IP mobility protocol processor 11 of LMA 4, referring to storage 12, grasps that MN 1 is currently under the control of MAGb 3, and transfers this information as control information to tunneling processor 13 for MN 1. From this control information from network-based IP mobility protocol processor 11, tunneling processor 13, performs IPv6 in IPv6 encapsulation of the packet shown in FIG. 6(a) by setting the IP address of LMA 4 as the outer source address and the IP address of MAGb 3 as the outer destination address as shown in FIG. 6(b), and transmits the packet from communication means 10 to MAGb 3.

Network-based IP mobility protocol processor 7 of MAGb 3 recognizes that the packet has come from communication means 5 through the tunnel for MN 1, hence identifies the MN by referring to the data of storage 8 as shown in FIG. 7(a). As a result of this, MAGb 3 can grasp which MN 1 the packet should be sent, so that it is possible to transmit the packet in the format of FIG. 6(a) to MN 1.

Next, packet delivery from the MN to the LMA will be described.
In MAGb 3, radio communication means 6 grasps the tunnel for the packet from MN 1, network-based IP mobility protocol processor 7 identifies the MN by referring to the data as in FIG. 7 (a) of storage 8 based on the grasped tunnel information. Further, network-based IP mobility protocol processor 7 acquires the information as to LMA 4 by referring to the header compression information in the data of storage 8 as in FIG. 7 (c) and outputs the information and the packet to tunneling processor 9 for MN 1. Based on this information on LMA 4, tunnel processor 9 implements IPv6 in IPv6 encapsulation of the packet by setting the IP address of MAGb 3 as the outer source address and the IP address of LMA 4 as the outer destination address, and forwards the packet to LMA 4 by way of the tunnel to LMA 4.

With the configuration as above, it is possible for the LMA and MAG to achieve correct routing. That is, the LMA or MN becomes able to deliver a packet with its header compressed to the MN or LMA by way of the MAG, hence it is possible to save the band for last one hop, which is the narrowest band.

### [The second embodiment]

FIG. 8 is a diagram showing a schematic configuration of a network in the present embodiment.

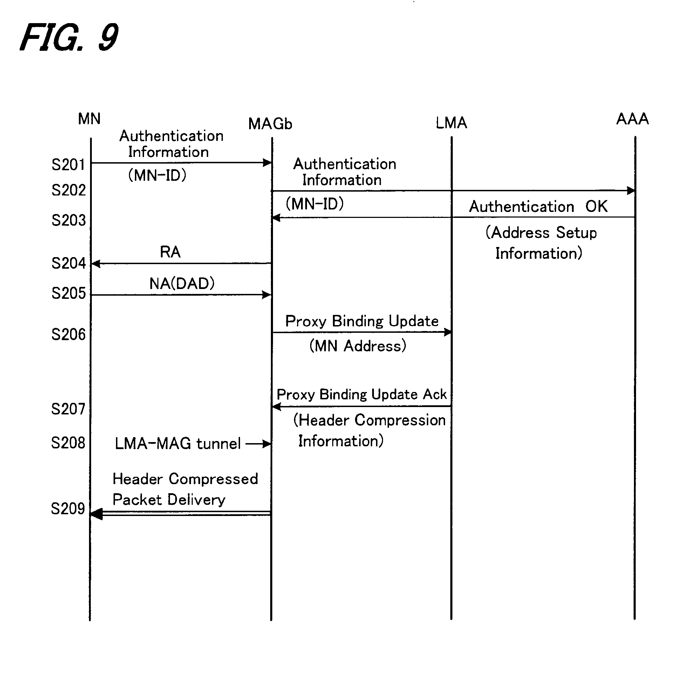

FIG. 9 is a sequence diagram showing the procedural steps of the process in the present embodiment.

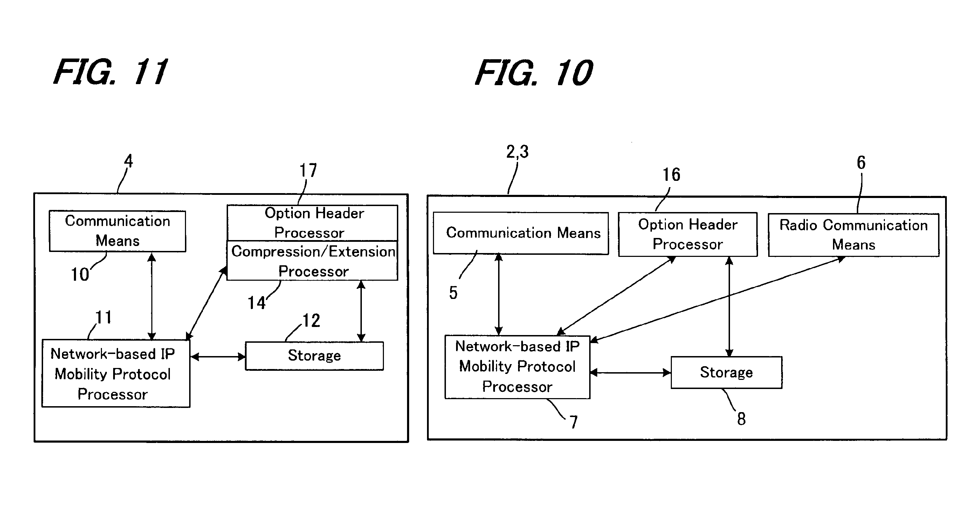

FIG. 10 is a block diagram showing a configuration of an MAG in the present embodiment.
FIG. 11 is a block diagram showing a configuration of an LMA in the present embodiment.

Similarly to the first embodiment, it is assumed that MN 1, which is initially located under the control of MAGa 2, transfers from the control of MAGa 2 to the control of MAGb 3 as it moves, as shown in FIG. 8.
The present embodiment will be described on the assumption that handover based on the Proxy Mobile IP scheme is effected.
In FIG. 8, an AAA server 15 is connected to MAGa 2 and MAGa 3 via a network.

As shown in FIG. 10, MAGb 2 and 3, similarly to the first embodiment, are configured by inclusion of: a communication means 5 that communicates with an LMA 4 and AAA server 15 for performing authentication etc.; a radio communication means 6 that communicates with MN 1 by wireless; a network-based IP mobility protocol processor 7; a storage 8. The difference from the first embodiment is the inclusion of an option header processor 16.

Also similarly to the first embodiment, LMA 4 is configured, as shown in FIG. 11, by inclusion of a communication means 10, a network-based IP mobility protocol processor 11, a storage 12 and a compression/extension processor 14. The difference from the first embodiment is the inclusion of an option header processor 17, as in MAGbs 2 and 3.

First, as shown in FIG. 9, at S201, MN 1 transmits authentication information at least including MN-ID, which is the identifier of MN 1, to MAGb 3 or the link local multicast address.

Then, network-based IP mobility protocol processor 7 of MAGb 3 having received the authentication information from MN 1 through radio communication means 6 stores the MN-ID into storage 8 and generates authentication information at least including the MN-ID and transmits it to AAA server 15 from communication means 5, at S202.

If AAA server 15 having received the authentication information recognizes the validity of MN 1's network participation, AAA server 15 searches the database held in itself or held by another node on the network, for MN 1's policy profile, based on the MN-ID as a key.

Upon this, at S203, AAA server 15 generates authentication OK (address setup information) at least including MN-ID as the identifier of the MN and address setup information such as MN 1's prefix etc., from the obtained policy profile, and transmits the authentication OK to MAGb 3.

Network-based IP mobility protocol processor 7 of MAGb 3 having received the address setup information fromAAA server 15 via communication means 5, transmits RA to MN 1 based on the aforementioned address setup information.

At S205, MN 1 having received the RA from MAGb 3, transmits NA to the link, following the DAD sequence.

Network-based IP mobility protocol processor 7 of MAGb 3 receives this NA from MN 1, then, at S206, transmits Proxy Binding Update including MAGb-ID or MAGb address, MN address and MN-ID to LMA 4. At S207, network-based IP mobility protocol processor 11 of LMA 4 transmits Proxy Binding Update Ack for confirmation to MAGb 3.

At this timing, the header compression information shown in FIG. 5, as described in the first embodiment, is also transmitted together. The header compression information may be transmitted being included in the Proxy Binding Update, as in the sequence diagram, or may be transmitted separately as shown in FIG. 2 of the first embodiment.

Network-based IP mobility protocol processor 7 of MAGb 3 that has received this Proxy Binding Update Ack, creates a tunnel to LMA 4 and stores the header compression information received from LMA 4 into storage 8.

As setup has been carried out in the above way, it becomes possible to perform communication between the LMA and MN by way of the MAG after handover, in the Proxy Mobile IP scheme.

Next, the process of delivering a header compressed packet by LMA 4 of the present embodiment to MN 1 by way of MAGb 3 will be detailed.

Hereinbelow, packet delivery from LMA to MN will be described.
Network-based IP mobility protocol processor 11 of LMA 4, having received a packet addressed to MN 1 from a foreign network via communication means 10, outputs the packet to compression/extension processor 14. Compression/extension processor 14, similarly to the ordinary ROHC, refers to the ROHC context in storage 12, so as to create a packet with its header compressed as in FIG. 6(a).

The packet addressed to MN 1 is processed by IPv6 in IPv6 encapsulation of network-based IP mobility protocol processor 11 into a packet addressed to MAGb 3, by setting the IP address of LMA 4 as the outer source address and the IP address of MAGb 3 as the outer destination address, and is forwarded by tunneling.

Here, if the packet is transmitted as it is, MAGb 3 cannot extract the MN 1's address. Therefore, in the present embodiment, an option header is added by an option header processor 17 (herein this should be a destination option header), so that the packet formatted as in FIG. 6(c) is transmitted to MAGb 3. This destination option header is generated from the information such as the MN address, or MN-ID, which enables identification of the MN.

Network-based IP mobility protocol processor 7 of MAGb 3, having received this packet with a destination option header attached, from LMA 4 via communication means 5, outputs the packet to option header processor 16. Option header processor 16 identifies the MN based on this option header, and transmits the packet in the form shown in FIG. 6(a), to the corresponding MN 1, from radio communication means 6.

Hereinbelow, packet delivery from MN to LMA will be described.
Network-based IP mobility protocol processor 7 of MAGb 3, having received a packet as in FIG. 6(a), can identify MN 1 by referring to the data of storage 8 as shown in FIG. 7 (b) based on the tunnel information from radio communication means 6. Network-based IP mobility protocol processor 7 refers to the header compression information in storage 8 using this MN-ID information as a key, to identify the MN 1's IP address and LMA 4's IP address.

Here, if this ROHC packet is transmitted as it is to LMA 4, LMA 4 cannot discriminate the compression information to be referred to, hence decompression cannot be done. Therefore, the packet is transmitted after inserting information that enables recognition of MN 1, e.g., MN-IP or MN-ID, into the option header (here, for example a routing option header is used), as shown in FIG. 6(d).

Communication means 10 of LMA 4 having received the packet with this option header fromMAGb 3, outputs this packet to option header processor 17. Option header processor 17 refers to the compression information in storage 12 based on the option header of the packet to identify the MN.

Further, option header processor 17 outputs the information on the MN and the packet to compression/extension processor 14. Based on this MN information, compression/extension processor 14 refers to the data of MN 1 in storage 12 as shown in FIG. 7(c), and gets access to the ROHC information on MN 1 and appropriately decompress the packet. Network-based IP mobility protocol processor 11 performs routing in accordance with the information of the extended header.

The configuration as above makes it possible for the MAG and LMA to achieve appropriate compression, extension or routing of a packet, based on the option header, also in the Proxy Mobile IP scheme.

Though the present embodiment was described in the Proxy Mobile IP scheme, the same effect can be obtained if the procedure of authentication by the AAA server is omitted.

### [The third embodiment]

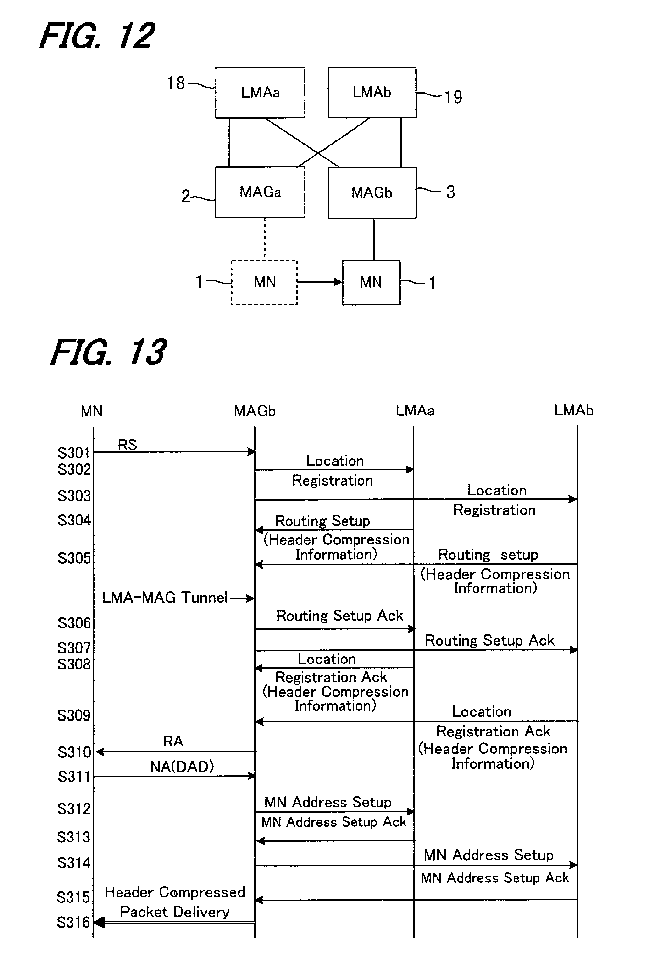

FIG. 12 is a diagram showing the schematic configuration of a network in the present embodiment.
FIG. 13 is a sequence diagram showing the procedural steps of the process in the present embodiment.

In the present embodiment, MN 1 has two addresses. Further, for each of these two addresses, a permanent ID and a temporary ID are provided as the MN-ID. Also, the present embodiment can be realized without giving, in particular, any header compression information to MAGs.

As shown in FIG. 12, initially, MN 1 is under the control of an MAGa 2. It is assumed that MN 1 transfers from the control of MAGa 2 to the control of an MAGb 3 as the MN 1 moves.

First, as shown in FIG. 13, at S301, MN 1 transmits address configuration information at least including MN-T-ID1 as a temporary identifier of MN 1 and LMAa-ID, the ID of LMAa 18 that manages MN-T-ID1. Similarly, it also transmits address configuration information at least including MN-T-ID2 as a temporary identifier of MN 1 and LMAb-ID, the ID of LMAa 19 that manages MN-T-ID2. By the way, these may be combined and transmitted as a single message. This is, in most cases, RS or NA. It is assumed in the present embodiment that this is RS. Here, MAGb 3 stores each temporary MN-ID and LMA-ID in an associated manner.

That is, network-based IPmobility protocol processor 7 of MAGb 3 having receivedRS and/or NA from radio communication means 6, stores MN-T-ID1 and MN-T-ID2 into storage 8 in assoication with LMAa-ID and LMAb-ID, respectively.

Next, at S302, location registration at least including MN-T-ID1 and MAGb-ID, the identifier of MAGb 3, is generated and transmitted from communication means 5 to LMAa 18.

Further, at S303, location registration including MN-T-ID2 and MAGb-ID, the identifier of MAGb 3, is generated and transmitted from communication means 5 to LMAa 19.

Network-based IP mobility protocol processor 11 of LMAa 18 having received the location registration from communication means 10, searches the data stored in storage 12 for the current state of MN 1, based on MN-T-ID1 as a key, and grasps from the data that MN 1 is currently belonging to MAGa 2. As receiving the location registration from MAGb 3, network-based IP mobility protocol processor 11 of LMAa 18 recognizes that MN 1 has moved, though the data shows that MN 1 is currently belonging to MAGa 2.

In a similar process, LMAb 19 also recognizes that MN 1 has moved.

Upon this, at S304, network-based IP mobility protocol processor 11 of LMAa 18 generates routing setup (routing setup instructions) at least including LMAa-ID, the identifier of LMAa 18, the global address of MN 1 and MN-Addrl and transmits the setup to MAGb 3 from communication means 10.

Similarly, at S305, network-based IP mobility protocol processor 11 of LMAb 19 generates routing setup (routing setup instructions) at least including LMAb-ID, the identifier of LMAb 19, the global address of MN 1 and MN-Addr2 and transmits it to MAGb 3 from communication means 10.

Network-based IPmobilityprotocol processor 7 of MAGb 3 having received this routing setup, creates a tunnel to LMAa 18 and sends routing setup Ack for confirmation to LMAa 18, at S306.

Similarly, routing setup Ack for confirmation is also sent to LMAb 19, at S307. Here, MAGb 3 stores MN-T-ID1 and MN-Addrl, and MN-T-ID2 and MN-Addr2, in an associated manner.

As a result, in MAGb 3, MN-T-ID1, MN-Addrl and LMAa-ID are stored in storage 8 in an associated manner. Similarly, MN-T-ID2, MN-Addr2 and LMAb-ID are stored in storage 8 of MAGb 3 in an associated manner.

Network-based IP mobility protocol processor 11 of LMAa 18 having received routing setup Ack from MAGb 3, transmits location registration Ack, at least including prefix information as to MN-Addrl of MN 1, to MAGb 3, at S308.

Similarly, at S309, network-based IP mobility protocol processor 11 of LMAb 19 also transmits location registration Ack, at least including prefix information as to MN-Addr2.

Network-based IP mobility protocol processor 7 of MAGb 3 having received location registration Ack, based on the aforementioned prefix information, transmits RA to MN 1 at S310. This RA may be sent for each LMA, or may be sent in combination. If they are combined, location registration Ack from LMAa 18 and that from LMAb 19 need to reach within short enough time. The present embodiment will be described on the assumption that they are transmitted separately at two times.

At S311, MN 1 having received RA from MAGb 3 transmits NA to the link, following the DAD sequence. Network-based IP mobility protocol processor 7 of MAGb 3 receives this NA from MN 1, then transmits MN address setup including MAGb-ID, MN-T-ID1 and MN-Addrl to LMAa 18 at S312. At S313, network-based IP mobility protocol processor 11 of LMAa 18 transmits MN address setup Ack for confirmation to MAGb 3.

Similarly, at S314, network-based IP mobility protocol processor 7 of MAGb 3 receives NA from MN 1, then transmits MN address setup including MAGb-ID, MN-T-ID2 and MN-Addr2 to LMAb 19. At S315, network-based IP mobility protocol processor 11 of LMAb 19 transmits MN address setup Ack for confirmation to MAGb 3.

Hereinbelow, delivery of a header-compressed packet by way of MAGb 3 by the LMA in the present embodiment will be detailed.

Hereinbelow, packet delivery from LMAa 18 to MN 1 will be described.
Network-based IP mobility protocol processor 11 of LMAa 18, having received a packet addressed to MN-Addrl from communication means 10, outputs the packet to compression/extension processor 14. Compression/extension processor 14, similarly to the ordinary ROHC, creates a packet as in FIG. 6(a), from the ROHC context in storage 12.

Further, since network-based IP mobility protocol processor 11 of LMAa 18 recognizes by referring to the data in storage 12 that the packet addressed to MN-Addrl is to be encapsulated with the address of MAGb 3 and transmitted by tunneling, the packet will be forwarded after encapsulation. However, if the packet is transmitted as it is, MAGb 3 cannot extract the MN 1's address. Therefore, network-based IP mobility protocol processor 11 outputs the packet in the state shown in FIG. 6(a) to option header processor 17. Option header processor 17 adds an option header (herein this should be a destination option header, for example) and outputs the packet to network-based IP mobility protocol processor 11.

Network-based IP mobility protocol processor 11 of LMAa 18 performs IPv6 in IPv6 encapsulation of the packet, by setting the outer source address with the address of LMAa 18 and the outer destination address with the address of MAGa 3, and transmits to MAGb 3 the packet in the packet format shown in FIG. 6 (c). This destination option header includes information such as the MN address, MN-Addr1 or MN-T-ID1, which enables identification of the MN.

Network-based IPmobilityprotocol processor 7 of MAGb 3, having received this packet with a destination option header attached, from communication means 5, outputs the packet to option header processor 16. Option header processor 16, referring to the header compression information in storage 8 based on the option header, recognizes that the packet is addressed to MN 1, and outputs the information on the MN to network-based IP mobility protocol processor 7. Network-based IP mobility protocol processor 7 transmits the packet in the form shown in FIG. 6 (a) from radio communication means 6 to MN 1.

Hereinbelow, packet delivery from LMAb 19 to MN 1 will be described.
Network-based IP mobility protocol processor 11 of LMAb 19, having received a packet address to MN-Addr2 from communication means 10, also outputs the packet to compression/extension processor 14, similarly to the description for LMAa 18. Compression/extension processor 14, similarly to the ordinary ROHC, creates a packet as in FIG. 6(a), from the ROHC context in storage 12.

Further, since network-based IP mobility protocol processor 11 of LMAb 19 recognizes by referring to the data in storage 12 that the packet addressed to MN-Addr2 is to be encapsulated with the address of MAGb 3 and transmitted by tunneling, the packet will be forwarded after encapsulation. However, if the packet is transmitted as it is, MAGb 3 cannot extract the MN 1's address. Therefore, network-based IP mobility protocol processor 11 outputs the packet in the state shown in FIG. 6(a) to option header processor 17. Option header processor 17 adds an option header (herein this should be a destination option header, for example) and outputs the packet to network-based IP mobility protocol processor 11.

Network-based IP mobility protocol processor 11 of LMAb 19 encapsulates the packet with the address of LMAb 19 as the source address and the address of MAGb 3 as the destination address, and transmits to MAGb 3 the packet in the packet format shown in FIG. 6(c). This destination option header includes information such as the MN address, MN-Addr2 or MN-T-ID2, which enables identification of the MN.

Network-based IP mobility protocol processor 7 of MAG 3, having received this packet with a destination option header attached, from communication means 5, outputs the packet to option header processor 16. Option header processor 16 recognizes that the packet is addressed to MN 1, from its option header. Option header processor 16 outputs the information on the MN to network-based IP mobility protocol processor 7. Network-based IP mobility protocol processor 7 transmits the packet in the form shown in FIG. 6(a) from radio communication means 6 to MN 1.

Hereinbelow, packet delivery from MN to LMA will be described.
MAGb 3 having received a packet as in FIG. 6 (a) identifies from which bearer that packet was sent, based on radio communication means 6. Network-based IP mobility protocol processor 7, having obtained the information as to the bearer from radio communication means 6, can identify the MN by referring to the data, as shown in FIG. 7(b), stored in storage 8, and acquires a temporary MN-ID. Network-based IP mobility protocol processor 7, based on this temporary MN-ID as a key, identifies LMA-ID, MN' s address and LMA's address associated with this MN-ID, from storage 8.

However, if this ROHC packet is transmitted as it is to the LMA, the LMA cannot decompress the packet. Therefore, network-based IP mobility protocol processor 7 of MAGb 3 outputs the packet to option header processor 16. Option header processor 16 inserts information that discriminates the MN, e.g., MN-IP, MN-ID or the like, into an option header (herein this should be a destination option header, for example) as shown in FIG. 6(e), attaches the header to the packet and transmits the packet to the LMA. FIG. 6(e) shows an example of the destination option header when the temporary MN-ID derived from the bearer is MN-T-ID1.

Network-based IP mobility protocol processor 11 of LMAa 18 (or LMAb 19) having received the packet attached with this option header, outputs the packet to option processor 17. Option header processor 17 refers to the compression information stored in storage 12 based on the option header to extract information on the MN and output the information to network-based IP mobility protocol processor 11. Based on the MN information, compression/extension processor 14 refers to the data in storage 12 as shown in FIG. 7(c), and get access to the ROHC information on the MN, and decompression can be appropriately done. Network-based IP mobility protocol processor 11 performs routing in accordance with the information from the extended header.

With the configuration as above, even when an MN has two IDs and addresses, it becomes possible for the LMA to which the address belongs to achieve appropriate compression and extension.

### [The fourth embodiment]

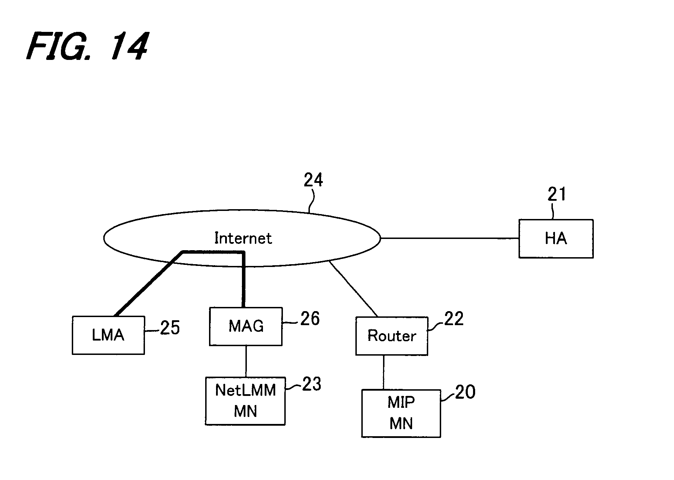

FIG. 14 is a diagram showing the schematic configuration of a network in the present embodiment.

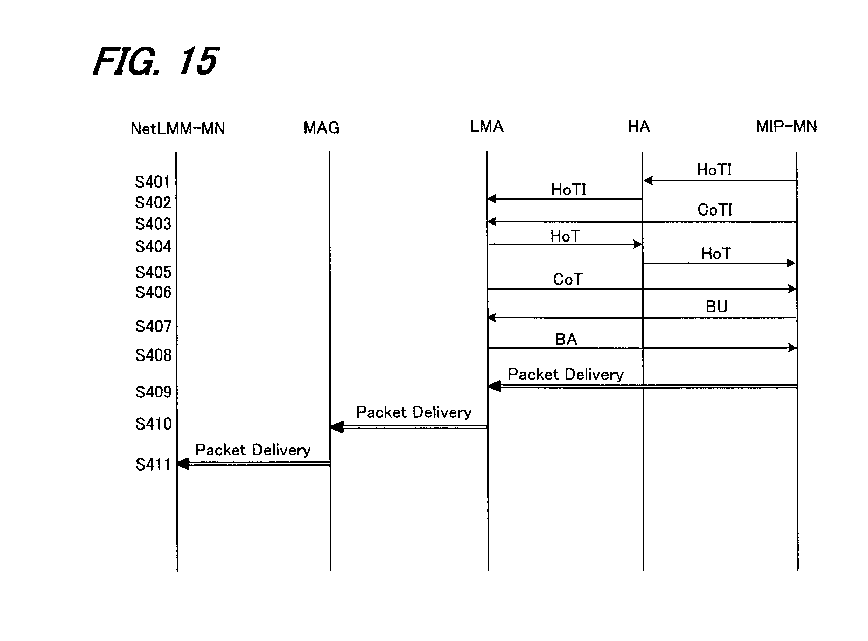

FIG. 15 is a sequence diagram showing the procedural steps of a process in the present embodiment.

The present embodiment will be described by taking an example of communication with a Mobile IP terminal. Also, it is assumed that a tunnel path has already been set up between LMA and MAGa.

It is assumed that an MIP-MN 20 is a mobile node, whose location is controlled by an HA 21, and the MN is currently visiting a link (external link, foreign link) of a Router 22, away from the home link.

Here, when MIP-MN 20, a terminal that functions based on Mobile IP protocol and a NetLMM-MN 23, a terminal that functions based on a network-based IP mobility protocol, starts communicating with each other via Internet 24, MIP-MN 20 initially starts packet transmission by way of HA 21.

Then, MIP-MN 20 transmits packets for RR, whose destination address is NetLMM-MN 23, for the purpose of route optimization.

As shown in FIG. 15, S401 and S402, MIP-MN 20 transmits HoTI to NetLMM-MN 23 by way of HA 21. MIP-MN 20 also transmits CoTI directly to Net LMM-MN 23 at S403.

However, these RR packets are initially sent to LMA 25. Then, normally, the packets addressed to NetLMM-MN 23 reach MAG 26 by way of the tunnel from LMA 25 and then are delivered to NetLMM-MN 23. In the present embodiment, since data is exchanged between MIP-MN 20 and NetLMM-MN 23, LMA 25 provides as the CN-proxy (proxy) function.

When receiving RR packets, LMA 25, instead of considering whether NetLMM-MN 23 is a terminal having the IPv6 function, determines whether the node is a node that is controlled by itself. When LMA 25 determines that NetLMM-MN 23 is a node whose location is controlled by itself, it provides a CN function in place of NetLMM-MN 23.

LMA 25, when receiving HoTI or CoTI addressed to NetLMM-MN 23, recognizes that the HoTI or CoTI is addressed to a terminal that is controlled by itself and that the HoTI or CoTI is a packet for RR, and determines that the packet will not be forwarded to NetLMM-MN 23. Then, LMA 25 creates HoT and CoT with their home address set with the address of NetLMM-MN 23, and returns the HoT and CoT to MIP-MN 20 at S404, S405 and S406.

MIP-MN 20 having received HoT and CoT, transmits BU to the address of NetLMM-MN 23 at S407.

Since packets addressed to NetLMM-MN 23 initially arrive on LMA 25, LMA 25 receives BU. LMA 25 checks whether the packet is BU and that the destination address is of a node that is controlled by itself. If it is confirmed that it is a node that is controlled by itself, the LMA creates Binding Cache, the database for managing Binding information, (which will be referred to hereinbelow as "BC"). Since LMA 25 controls a plurality of MNs, this BC is managed in association with the NetLMM-MN 23' address or NetLMM-MN 23's ID. When BA (Binding Acknowledgement, which will be referred to hereinbelow as "BA"), a massage that notifies that update has been successfully processed, is needed, LMA 25 returns BA with its source address set with the address of NetLMM-MN 23, to MIP-MN 20 at S408.

These procedures for route optimization are completed, the packet addressed from MIP-MN 20 to NetLMM-MN 23 is added with a destination option header and transmitted. At S409, when receiving a packet that is addressed to a node that is controlled by LMA 25 and has a destination option header of MIP specifications, LMA 25compares the packet with BCE (Binding Cache Entry) and replaces its header by setting the source address with the HoA of MIP-MN 20 and the destination address with the NetLMM-MN 23's address. In this process, the destination option header of MIP specifications is deleted.

Next, the packet with its header replaced is compressed following the ROHC context. In a general ROHC, a packet attached with a ROHC header without compression is initially transmitted and received so as to exchange the ROHC context (header compression information) between the compressor and decompressor. In the present embodiment, however, description on this will be omitted. Further, this ROHC context is also managed in assoication with the NetLMM-MN 23' s address or NetLMM-MN 23' s ID because a plurality of MNs belong to LMA 25.

When the header is compressed, it has been known that the destination address is NetLMM-MN 23. Accordingly, the option header of the tunnel header is attached to the packet, so that the packet is transmitted to MAG 26 at S410. This option header includes the NetLMM-MN 23's IP address or an ID that is determinable from the NetLMM-MN 23's IP address.

MAG 26 recognizes NetLMM-MN 23 with reference to the option header, and forwards the packet from its bearer with NetLMM-MN 23, via radio communication means 6, at S411.

The header compressed packet, which has been compressed at NetLMM-MN 23, and addressed from NetLMM-MN 23 to MIP-MN 20, is transmitted via the bearer between NetLMM-MN 23 and MAG 26. MAG 26, referring to the data as in FIG. 7 (b) based on bearer information (e. g. , the MAC address of NetLMM-MN 23, etc.), recognizes the NetLMM-MN 23's ID or IP address, and transmits the option header includes with the IP address header associated with the tunnel between LMA and MAG, to LMA 25.

LMA 25 having received the header compressed tunneling packet from NetLMM-MN 23 via MAG 26, recognizes the MN with reference to the option header and identifies the ROHC context to be used and extends the header compression. At this time, LMA 25 also deletes the header outside the tunnel. At this stage, the source address is the address of NetLMM-MN 23 and the destination address is the HoA of MIP-MN 20.

Next, LMA 25 refers to BC because the destination address of this packet is addressed to MIP-MN 20. LMA 25, based on BC, stores the HoA as a routing option header TYPE2 so as to make the header meet the IPv6 protocol, and sets the CoA of MIP-MN 20 as the destination address and transmits the packet to MIP-MN 20.

With this configuration, it is possible to effect appropriate routing even between MIP-MN and NetLMM-MN.

The proxy of the Mobile IPv6 function in the aforementioned LMA will be described in further detail.

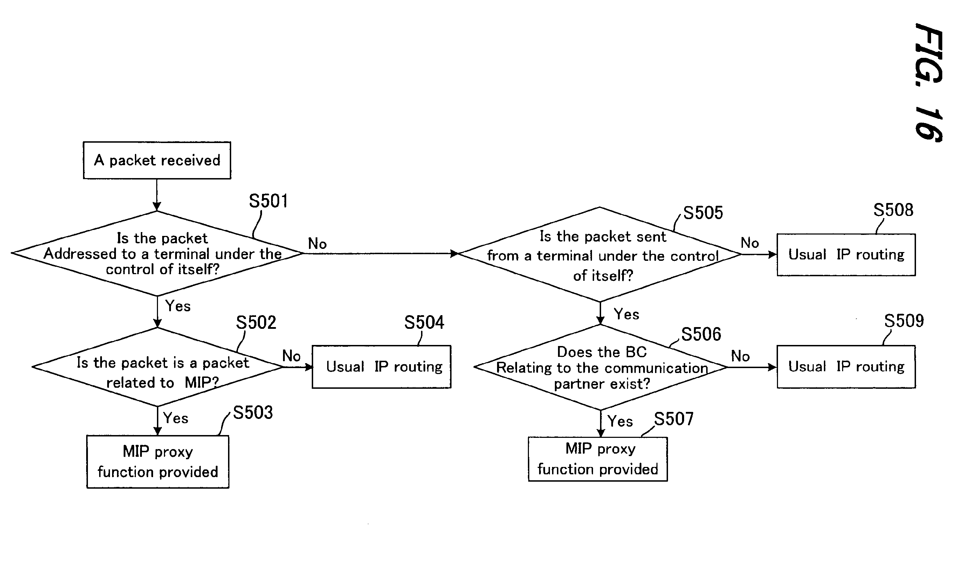

FIG. 16 is a flow chart showing the procedural steps of the proxy process of the Mobile IPv6 function in the LMA.

First, the LMA, as receiving a packet, determines whether the destination of the packet is the address of a node that is controlled by itself, at S501.

When the answer meets the condition or is YES at S501, it is checked whether the packet is a packet that is associated with MIP, i.e., a packet attached with an option header for HoTI, CoTI, BU and MIP specifications. When the answer does not meet the condition or is NO at S501, the control goes to S505.

When the answer meets the condition or is YES at S502, the LMA provides a MIP proxy function at S503. When the answer does not meet the condition or is NO at S502, the LMA performs usual IP routing at S504.

When the answer is NO at S501, the LMA determines whether the received packet is that from a node that is controlled by itself, at S505.

When the answer meets the condition or is YES at S505, the LMA determines whether it has the BC associated to the communication partner at S506. When the answer does not meet the condition or is NO at S505, the LMA performs usual IP routing at S508.

When the answer meets the condition or is YES at S506, the LMA provides a MIP proxy function at S507. When the answer does not meet the condition or is NO at S506, the LMA performs usual IP routing at S509.

When ROHC is used between the LMA and MN, the process described in the first to third embodiments should be implemented after the aforementioned procedure of Mobile IPv6 function proxy has been done.

With the above configuration, upon communication with a MIP-MN, the LMA acts as a proxy for a correspondent node (MIP-CN) in the communication based on Mobile IP protocol, so that mobility signalings or headers in Mobile IP protocol become unnecessary between the LMA and NetLMM-MN, hence it is possible to prevent degradation of header compression efficiency.

Further, making the LMA act as the proxy for the MIP-CN function and use of option headers, will not make impossible for the MAG to deliver even if the LMA and MN are made to serve as compressors and decompressors, so that it is possible to perform header compression at a high compression ratio for the last one hop.

The communication system, control apparatus and router using a network-based IP mobility protocol of the present invention as well as its communication method should not be limited to the above-illustrated examples alone, but various modifications can be added without departing from the gist of the present invention.

## Claims

1. A communication system using a network-based IP mobility protocol, in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus, **characterized in that**
the router on a visiting network of the mobile terminal, receives a notice including an identifier of the mobile terminal, from the mobile terminal and transmits a notice including the identifier of the mobile terminal and the identifier or IP address of the router, to the control apparatus;
the control apparatus transmits a notice of the information including routing information on the mobile terminal, to the router on the visiting site of the mobile terminal; and,
the control apparatus and the router share the routing information so as to perform compression or extension and routing of data between the control apparatus and the mobile terminal.

2. A communication system using a network-based IP mobility protocol, in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus, **characterized in that**
the router on a visiting network of the mobile terminal, receives a notice including an identifier of the mobile terminal, from the mobile terminal and transmits a notice including the identifier of the mobile terminal to a information management apparatus;
the information management apparatus transmits a notice of the information including address setup information on the mobile terminal, to the router on the visiting site of the mobile terminal;
the router transmits a notice including an identifier and/or the IP address of the mobile terminal and the IP address of the router, to the control apparatus;
the control apparatus transmits a notice of the information including routing information on the mobile terminal, to the router; and
the control apparatus and the router share the routing information so as to perform compression or extension and routing of data between the control apparatus and the mobile terminal.

3. The communication system using a network-based IP mobility protocol according to Claim 1 or Claim 2, wherein
the control apparatus and the router include a routing processor for each of the mobile terminals;
the control apparatus compresses a header of data based on compression information, performs a header process at the routing processor for the mobile terminal, and transmits the data to the router; and,
the router having received the data from the control apparatus identifies the mobile terminal based on the routing information of the data and transfers the data to the mobile terminal.

4. The communication system using a network-based IP mobility protocol according to Claim 3, wherein
the mobile terminal compresses a header of data based on compression information shared with the control apparatus and transmits the data to the router;
the router having received the data from the mobile terminal identifies the mobile terminal based on bearer information of the data, performs a header process at the routing processor for the mobile terminal, and transmits the data to the control apparatus; and
the control apparatus having received the data from the router identifies the mobile terminal based on routing information of the data and extends the header based on the compression information of the mobile terminal.

5. The communication system using a network-based IP mobility protocol according to Claim 4, wherein the routing processor performs a tunneling process and attaches a destination address to the header by encapsulating the data.

6. The communication system using a network-based IP mobility protocol according to Claim 5, wherein in the routing processor a process of attaching an option header to the data is performed, and the routing processor of the control apparatus or the router having received the data identifies the mobile terminal with which data is received and transmitted based on the option header.

7. The communication system using a network-based IP mobility protocol, according to Claim 6, wherein the control apparatus executes a proxy function for the mobile terminal when the terminal communicated with the mobile terminal performs data transmission and reception based on a Mobile IP protocol.

8. A communication system using a network-based IP mobility protocol, in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus, **characterized in that**
the control apparatus includes a storage means for storing a binding cache as the communication information on the mobile terminal to relay based on a Mobile IP protocol; and,
the control apparatus relays the data between the mobile terminal and a terminal that uses the Mobile IP protocol, when the received data is used for communication between the mobile terminal controlled by the control apparatus and the terminal using the Mobile IP protocol.

9. A control apparatus which is used in a system performing communication in which a mobile terminal, based on the network-based IP mobility protocol, performs communication by transmission and reception of data through a router that belongs to a same link, based on an address uniquely assigned to the mobile terminal, and performs control of changing over communication when the mobile terminal has moved to another network, comprising:
a communication means which receives a notice including the identifier of the mobile terminal, the identifier or IP address of the router, from the router on the visiting network the mobile terminal;
a storage means which holds the communication information on the router for relaying and the mobile terminal and the header compression information; and,
a control means for referring to the storage means with regards to the communication information on the mobile terminal based on the identifier of the mobile terminal included in the notice from the router, updating the information on the router on the visiting site, and creating a notice of information including the routing information on the mobile terminal to be transmitted to the router,
**characterized in that** the control apparatus shares the routing information with the router so as to perform compression or extension and routing of data between itself and the mobile terminal.

10. The control apparatus according to Claim 9, further comprising:
a compression/extension processor for each of the mobile terminals for performing compression and extension of the header of the data; and
a routing processor for each of the mobile terminals,
wherein the compression/extension processor compresses a header of data based on the compression information, the routing processor performs a header process, and the communication means transmits the data to the router.

11. The control apparatus according to Claim 10, wherein the control means discriminates the mobile terminal based on the routing information on the data received from the router, and the compression/extension processor extends the header by reference to the compression information of the mobile terminal stored in the storage means.

12. The control apparatus according to Claim 11, wherein the routing processor performs a tunneling process and attaches a destination address to the header by encapsulating the data.

13. The control apparatus according to Claim 12, wherein in the routing processor a process of attaching an option header is performed when the data is transmitted to the router, so that the mobile terminal for receiving and transmitting the data is recognized based on the option header.

14. The control apparatus according to Claim 13, wherein the control means executes a proxy function for the mobile terminal when the terminal communicated with the mobile terminal performs data transmission and reception based on a Mobile IP protocol.

15. A control apparatus which is used in a system performing communication in which a mobile terminal, based on a network-based IP mobility protocol, performs communication by transmission and reception of data through a router that belongs to a same link, based on an address uniquely assigned to the mobile terminal, and performs control of changing over communication when the mobile terminal has moved to another network, comprising:
a storage means for storing a binding cache which is communication information on the mobile terminal to relay based on a Mobile IP protocol; and,
a control means, which, when the received data is used for communication between the mobile terminal controlled by the control means and a terminal using the Mobile IP protocol, relays the data between the mobile terminal and the terminal that uses the Mobile IP protocol.

16. A router for performing transmission and reception of data with a mobile terminal that belongs to a same link and performs communication using a network-based IP mobility protocol based on an address uniquely assigned to the mobile terminal under the control of a control apparatus, comprising:
a first communication means for receiving a notice from the mobile terminal that has moved;
a storage means for storing an identifier of the mobile terminal;
a control means for creating a notice to be transmitted to the control apparatus, the notice including the identifier of the mobile terminal, the identifier or IP address of the router; and,
a second communication means for communicating with the control apparatus,
**characterized in that** the second communication means transmits the notice to the control apparatus, or receives a notice of information including routing information on the mobile terminal, from the control apparatus;
the control means stores the information including the routing information on the mobile terminal, into the storage means; and
the router shares the routing information with the control apparatus, thereby transferring compressed data to the control apparatus or the mobile terminal.

17. A router for performing transmission and reception of data with a mobile terminal that belongs to a same link and performs communication using a network-based IP mobility protocol based on an address uniquely assigned to the mobile terminal under the control of a control apparatus, comprising:
a first communication means for receiving a notice from the mobile terminal that has moved;
a storage means for storing the identifier of the mobile terminal;
a first control means for creating a notice including the identifier of the mobile terminal;
a second control means which transmits the notice to an information management apparatus or receives address setup information on the mobile terminal from the information management apparatus; and,
a second control means which, based on the address setup information, creates an address setup notice, including an address prefix, to be notified to the mobile terminal and routing information, including the identifier or address information of the mobile terminal and router address information, to be notified to the control apparatus,
**characterized in that** the first communication means gives the address setup notice to the mobile terminal, and the second communication means gives the routing information to the control apparatus, and
the router shares the routing information with the control apparatus, thereby transferring compressed data to the control apparatus or the mobile terminal.

18. The router according to Claim 16 or Claim 17, wherein a routing processor is provided for each of the mobile terminals, and,
the control means, when the data has been received from the control apparatus, discriminates the mobile terminal based on the routing information of the data and transfers the data to the mobile terminal.

19. The router according to Claim 18, wherein the control means, when the data has been received from the mobile terminal, identifies the mobile terminal based on bearer information on the data, performs a header process at the routing processor and transfers the data to the control apparatus.

20. The router according to Claim 19, wherein the routing processor performs a tunneling process and attaches a destination address to a header by encapsulating the data.

21. The router according to Claim 20, wherein the routing processor, when transmitting the data to the control apparatus, performs a process of attaching an option header, and when having received the data from the control apparatus, discriminates the mobile terminal based on the option header and transfers the data to the mobile terminal.

22. A communication method, which, using a network-based IP mobility protocol, causes a mobile terminal to transmit and receive data through a router that belongs to a same link, based on an address uniquely assigned to the mobile terminal, and causes a control apparatus to perform control of changing over communication of the mobile terminal when the mobile terminal has moved to another network,
**characterized in that** the mobile terminal implements a step of creating a notice including the identifier of the mobile terminal and a step of transmitting the notice to the router on the visiting site;
the router on the visiting site implements a step of creating a notice including the identifier of the mobile terminal and the identifier or IP address of the router;
the control apparatus implements a step of transmitting the notice created by the router; and
the control apparatus implements a step of creating a notice of information including routing information on the mobile terminal, and a step of transmitting the notice created by the control apparatus to the router at the visiting site, so that the control apparatus and the router share the routing information, thereby performing compression or extension and routing of data between the control apparatus and the mobile terminal.

23. A communication method, which, using a network-based IP mobility protocol, causes a mobile terminal to transmit and receive data through a router that belongs to a same link, based on an address uniquely assigned to the mobile terminal, and causes a control apparatus to perform control of changing over communication of the mobile terminal when the mobile terminal has moved to another network,
**characterized in that** the mobile terminal implements a step of creating a notice including the identifier of the mobile terminal and a step of transmitting the notice to the router on the visiting site;
the router on the visiting site implements a step of creating a notice including the identifier of the mobile terminal and a step of transmitting the notice created by the router to an information management apparatus;
the information management apparatus implements a step of creating a notice including address setup information by searching stored address setup information, based on the identifier of the mobile terminal and a step of transmitting the notice created by the information management apparatus to the router; and,
the router implements a step of creating a notice including the address information of the mobile terminal and the address information of the router, and a step of transmitting a notice including the address information of the mobile terminal and the router to the control apparatus, so that the control apparatus and the router share the routing information, thereby performing compression or extension and routing of data between the control apparatus and the mobile terminal.

24. The communication method according to Claim 22 or Claim 23, wherein the control apparatus executes a proxy function for the mobile terminal when the terminal communicated with the mobile terminal performs data transmission and reception based on a Mobile IP protocol.

25. A communication method, which, using a network-based IP mobility protocol, causes a mobile terminal to transmit and receive data through a router that belongs to a same link, based on an address uniquely assigned to the mobile terminal, and causes a control apparatus to perform control of changing over communication of the mobile terminal when the mobile terminal has moved to another network,
**characterized in that** when the received data is used for communication between the mobile terminal controlled by the control apparatus and a terminal using a Mobile IP protocol, the control apparatus relays the data between the mobile terminal and the terminal that uses the Mobile IP protocol.
